# EUROPEAN PATENT APPLICATION

(11) **EP 4 795 930 A1**
(43) Date of publication of application: **26.08.2026**
(21) Application number: 26159769.4
(22) Date of filing: 20.02.2026
(51) Int. Cl.: A01K 11/00, G06Q 50/02

(54) **METHOD AND DEVICE FOR ASSOCIATING A TRANSPONDER**

(30) Priority: 21.02.2025 NL 2039832
(71) Applicant: Nedap N.V., 7141 DC Groenlo (NL)
(72) Inventor: GERRITSEN, Christoffel Petrus Albertus, 7141 DC Groenlo (NL); SCHREURS, Bernard Jan Gerrit, 7141 DC Groenlo (NL)
(74) Representative: V.O.

(57) **Abstract**

The invention relates to a method for a livestock management system for coupling a second transponder to an animal, wherein the animal carries a first and a second transponder. The first transponder transmits first identification data, already associated with animal identification data, which are stored together in the data storage. The method comprises receiving, by the reader device, a plurality of identification data, including the first and the second identification data. A controller determines whether both identification data have been received within a predetermined time span. Only when this is the case, the second transponder is coupled to the animal identification data, thereby ensuring accurate association between transponders and animals.

## Description

### Field of the invention

The present invention relates to a method for use of a livestock management system, for associating a second transponder with an animal, wherein the animal is provided with a first transponder and a second transponder. The invention further relates to a device for use in a livestock management system and suitable for carrying out such a method, as well as to a computer-implemented method.

### Background

In modern livestock farming, transponders are used for various purposes for identification of and data exchange with animals in a herd for the management of livestock. The individual animals are for that purpose provided with such transponders, which are for example integrated in ear tags, neck tags or other tags worn by the animal. These can be detected at a distance or can be interrogated, wherein identification data are exchanged. The identification data are unique to the respective transponder, and by associating the transponder with an individual animal in a livestock management system, the animal management for each of the animals of the herd can be tracked. The transponders can furthermore be wirelessly or wiredly connected with sensors for measuring various parameters, such as body parameters, movements, outside temperature, et cetera.

It may occur that an animal that is provided with a transponder needs to be provided with an additional transponder. This may for example be the case when existing transponders need to be replaced by new transponders, or when additional tags with specific sensors need to be applied in order to add functionality to the system. For each animal, the coupling between the individual animal and the identifier of the respective transponder is recorded in the livestock management system. For that purpose, the user reads out the identification data from the new transponder and makes the coupling with the animal record in the livestock management system. A disadvantage hereof, however, is that this is a substantial task for an entire herd, and that it is moreover error-prone. When the replacement of animal tags occurs only sporadically, this disadvantage is manageable; however, the replacement of tags also occurs frequently in between when the tag for example becomes defective or the battery of the tag becomes empty. Such a situation also occurs when adding new animals to a herd or removing animals from the herd; this occurs in livestock farming daily or even multiple times per day. There are thus numerous moments at which one or more tags need to be replaced, and at each of those moments errors can be made that lead to recording incorrect data in the system.

International patent application no. WO 2022/003666 describes a method for assigning tags or transponders to animals by identification readings of separate devices. The method, however, requires multiple readers and repeated readings of two transponders, which complicates the implementation. If an animal, for example, moves out of the range of the readers between the first and second reading, this can lead to failed or incorrect assignment of tags. In addition, the use of IR tags limits the applicability of this method.

### Summary of the invention

It is an object of the present invention to simplify and improve the above, and to provide a method that reduces the risk of errors and can be carried out quickly and efficiently.

To this end, the invention according to a first aspect thereof provides a method for use of a livestock management system, for associating a second transponder with an animal. Herein, the animal is provided with a first transponder and a second transponder, wherein the first transponder and the second transponder are respectively configured for transmitting first identification data and second identification data. The first identification data are already associated with animal identification data of the animal, and the first identification data and the animal identification data are stored in association with each other in a data storage of the livestock management system. The method comprises receiving, with a reader device of the livestock management system, a plurality of identification data, the plurality of identification data comprising the first identification data and the second identification data. A controller, for example of the reader device or in the livestock management system, determines whether the first and the second identification data have both been received within a predetermined time span, and, depending on the determining, associates the second transponder with the animal. However, the second identification data are associated with the animal identification data only when it has been determined during the step of determining that the first and the second identification data have both been received within the predetermined time span.

In the simplest configuration, the reader device may consist only of a single reader with antenna. In the above manner, with only a single reader, by selecting a suitable time span, it can be assumed that the first and second identification data that have both been received within the same time span belong to the same animal. This is in particular the case when the first transponder has a limited transmit/receive range, and thus can be detected only at a short distance from the reader device. This is for example the case when using tags based on a passive transmission technology, such as passive RFID tags (ISO 11784/11785). In passive RFID tags, tags are read out by bringing them into an interrogation field. The reader device thereby transmits an interrogation signal with which the interrogation field is generated. The interrogation signal is received by a tag that is located in the interrogation field, wherein the transponder of the tag draws energy from the received interrogation signal. The amount of available energy is therefore limited, and furthermore the reception range of the transponder itself is limited to an area in which the interrogation field is sufficiently strong (i.e., the interrogation signal is still received sufficiently strongly) to transfer enough energy. The described time span is a predetermined or adjustable time domain; this may be a factory setting or may possibly be made adjustable for the user.

Further, although the invention can be carried out with only a single reader with antenna, it is not limited thereto. It is for example also possible to provide a reader device with a single reader with multiple antennas, wherein the interrogation fields are substantially overlapping. Furthermore, a reader device may also be applied provided with a plurality of readers each with one or more antennas, provided that, in that case, the interrogation fields also substantially or sufficiently overlap. The interrogation fields are considered to be sufficiently overlapping when the boundaries thereof are substantially the same, wherein the boundary of an interrogation field is formed by the edge of the area within which the interrogation signal is sufficiently strong to initiate a response or reaction of transponders (in the form of a transmission signal comprising identification data). Whether a reader device is or is not formed by one or more readers with one or more antennas is an implementation choice.

In this manner, the invention makes it easy to register new transponders in a livestock management system. For example, in the example of passive RFID tags, the animals can be guided past a reader device via, for example, a passageway. Optionally, the passageway comprises a separation gate for separating animals for which something special is the case with the transponders (for example a defective transponder). As soon as the animals are sufficiently close in the vicinity of the reader device, the interrogation field generated by the interrogation signal transmitted by the reader device activates the first and the second transponder. Both transponders, in response thereto, transmit their identification data by means of a transmission signal, so that the reader device simultaneously (or nearly simultaneously) receives the first and second identification data. In that case, both transponders operate within the same frequency band as the reader device. The transmission signals of both transponders will then typically comprise a carrier frequency that corresponds to the carrier frequency of the interrogation signal - for example by modulating the latter by means of variation of the impedance of the transponder, or for example by backscattering at or around the carrier frequency of the interrogation signal. Collision of different transmission signals can then be prevented by means of different anti-collision protocols, as known to the person skilled in the art.

By determining, with a controller in (or connected with) the reader device, the time difference between the start of receipt of the first transmission signal containing the first identification data and the start of receipt of the second transmission signal containing the second identification data, the controller can determine whether it is likely that the two transponders are physically connected with the same animal. The measured time difference is for that purpose for example compared with a predetermined time span. When this time span is greater than the time difference, then the first identification data and the second identification data have been received simultaneously or almost simultaneously, and the assumption is that the two transponders are physically connected with the same animal. In the livestock management system, the animal identification data of the animal that is associated with the first identification data can in that case also be associated with the second identification data, and this association can be stored or communicated.

However, when this time span is smaller than the time difference, then the first identification data and the second identification data have not been received simultaneously and the time difference between receipt of the first and second identification data is too large to be able-without further analysis-to assume that the two transponders are physically connected with the same animal. In the livestock management system, the animal identification data of the animal that is associated with the first identification data cannot in that case simply be associated with the second identification data. In such cases, in some embodiments of the method an additional check may take place. It may also occur that no second identification data are received at all. In both cases, it may be desirable to separate the animal from the herd, for example for a manual check. It is also possible that, according to some implementations of the method, additional steps are performed, such as measuring certain transmission parameters or transmission characteristics.

In some example implementations of the concept described herein, the step of determining whether the first and the second identification data have been received within the predetermined time span comprises one or more of the sub-steps described below. A first sub-step may be determining a time difference between receipt of the first identification data and receipt of the second identification data, and comparing the time difference with the predetermined time span. This sub-step has already been described above in a specific implementation thereof, but can be applied more broadly within the scope and spirit of the invention.

A second sub-step may be determining a first time duration within which transmission signals comprising the first identification data are received and a second time duration within which transmission signals comprising the second identification data are received, and comparing the first time duration with the second time duration. In this sub-step, for each of the transmission signals the entire time duration is determined within which the transmission signal has been received, after which these time durations for the first and second identification data are compared with each other. Because an animal that is provided with two (or more) transponders passes through the interrogation field only for a certain time duration, comparing the time durations of receipt of the transmission signals of the two transponders provides additional information about the likelihood that the first identification data and the second identification data belong to the same animal. The time duration can for example be measured from the start to the last received signal, but can also be measured from a certain (for example pre-set) signal strength.

A third sub-step may also be determining a first start time of a time duration within which transmission signals comprising the first identification data are received and a second start time of a time duration within which transmission signals comprising the second identification data are received, and comparing the first start time with the second start time. This implementation corresponds in some embodiments to the first sub-step. A fourth sub-step may furthermore be determining a first end time of a time duration within which transmission signals comprising the first identification data are received and a second end time of a time duration within which transmission signals comprising the second identification data are received, and comparing the first end time with the second end time. In this implementation, the end times of last receipt of the first identification data and the second identification data are compared with each other for providing additional information about the likelihood that the first identification data and the second identification data belong to the same animal.

In some implementations or embodiments that have already been discussed above, the first transponder and the second transponder, for transmitting the first and the second identification data, respectively are configured for transmitting a first transmission signal comprising the first identification data and a second transmission signal comprising the second identification data. In these examples, the method may further comprise, prior to the step of associating, analyzing, with the controller, one or more signal characteristics of both the first transmission signal and the second transmission signal, wherein the step of associating is further performed depending on the step of analyzing. Apart from a time or time duration of receipt, there are other characteristics of the transmission signals that can be compared in order to determine whether the transmission signals belong to transponders that are physically connected with the same animal. For example, in some specific embodiments this can be implemented as follows, in that the step of analyzing the one or more signal characteristics comprises at least one of the steps of determining and comparing a signal intensity of the first transmission signal with a signal intensity of the second transmission signal; or determining a first time course of a signal intensity of the first transmission signal and determining a second time course of a signal intensity of the second transmission signal, and comparing the first time course with the second time course. In particular, for example, a received signal strength indicator (RSSI) value can be determined and compared with the intensity upon transmitting the signal for both transmission signals, i.e. of both the first and the second transponder. An approximately equal attenuation corresponds with an approximately equal distance to the transponder. Determining the time course enables an even more reliable check, because therein the change of the intensity profile during receipt can be compared between the transmission signals of both transponders. The chance that a transponder of another animal, which happens to be walking nearby, also has exactly the same course is quite small. The time course is after all dependent on how the animal moves relative to the reader device. Furthermore, a combination of several of the above steps (as well as the sub-steps mentioned earlier) is possible for carrying out an even better check. In this manner, a reliable coupling between the second identification data and the animal identification data can be made.

In some examples of implementations of the present concept, when it has been determined during the step of determining that the first and the second identification data have not both been received within the predetermined time span, the method comprises a further step. This further step may be selected from a group comprising: determining that the first identification data have not been received, and depending thereon detecting a defect, malfunction or absence of the first transponder; or determining that the second identification data have not been received, and depending thereon designating that the animal that is associated with the first identification data is not provided with the second transponder.

When, for example, the first identification data have not been received, this can be established because in that case no identification data have been received that correspond to animal identification data in the livestock management system. Second identification data may then have been received (which in that case do not match animal identification data in the livestock management system), so that it is nevertheless clear that an animal (or actually a transponder) is passing. In that case, the system can assume that the first transponder is defective or not present, and can respond appropriately. An appropriate response may for example be that an attention signal is generated. It is also possible that a separation gate is operated in order to separate the relevant animal from the herd for performing a manual check.

When, however, first identification data have been received (matching animal identification data in the livestock management system) but no second identification data, the second transponder may be defective or not present. Also in this case, the system can respond by generating an attention signal or operating a separation gate. When, however, for both identification data (i.e. both the first and the second) a coupling already exists with animal identification data, then an animal may be passing that has already previously been registered by the system. Alternatively, it may also be the case that two animals simultaneously walk through the interrogation field, and an additional analysis as described earlier must be performed. In the latter case, incidentally, more than two different identification data will also be received, because two animals would have to carry a total of four transponders. In the case of deviating numbers, therefore, in many cases something unusual may be going on, and manual checking may be desired. In accordance with some embodiments, the method therefore comprises a step of operating a separation gate, for separating the animal.

When the determination whether the first and the second identification data have both been received within a predetermined time span is positive, or the subsequent checking step or sub-step provides sufficient information to be able to establish that the first and the second identification data belong to the same animal, then a method according to the invention in some examples thereof further provides a step of-when the second identification data are associated with the animal identification data-storing the second identification data and the animal identification data in the data storage of the livestock management system. The coupling between the second identification data and the animal identification data is thereby registered in the system.

In accordance with some embodiments of a method according to the present invention, the step of receiving the plurality of identification data comprises the sub-steps of: determining, with a processor of the livestock management system, whether at least one identification data of the plurality of identification data comprises a country code; and designating, when the at least one identification data comprises a country code, the at least one identification data as the first identification data. This embodiment is based on the insight that registered passive RFID tags comprise identification data by which they are traceable to the country of registration of the tags. Such transponders may for example already be worn by the animal, or were already present before the animal was provided with a second transponder.

In accordance with some embodiments of a method according to the present invention, the step of receiving the plurality of identification data further comprises the sub-steps of: designating, when the at least one identification data does not comprise a country code, the at least one identification data as the second identification data. In particular, the combination of a transponder with a country code (a three-digit code lying within the range -899), and a transponder without a country code but with a manufacturer code (a code lying between 900-999) occurs frequently when an animal is provided with two transponders. When, upon reading, two country codes (or two manufacturer codes) are read, this may indicate that something is not correct and that the transponders may belong to different animals.

In yet another implementation or example of a concept according to the invention, the time span (which is used to determine whether the signals are sufficiently close to each other in time) is statistically determined or corrected. Herein, for determining or correcting the time span, the method for example comprises obtaining, by the controller, for a plurality of animals, transmission data, wherein the transmission data for each animal comprise at least: a first receipt time of a first receipt of the first identification data and a second receipt time of a first receipt of the second identification data. Alternatively or additionally, the method, for determining or correcting the time span, may for example also comprise: for each animal, based on the transmission data, determining a time difference between the first receipt time and the second receipt time, for obtaining a plurality of time differences. In the same manner, this information can be processed statistically. Furthermore, such an implementation for example comprises the step of calculating, based on the plurality of time differences, the time span. With the above example data, it can be statistically determined within which time span, for example, an acceptable portion of the first and second identification data are received, in order thus to determine a characteristic value for the time span. For example, it can be determined within which time 70%, 75%, 80%, 85%, 90%, 95% or 99% of the first and second identification data belonging to the same animal are received when animals pass a reader device. The above examples are not limitative; the mentioned percentage can be suitably selected by the skilled person, for example somewhere lying within the range of 50% to 100%. It is also possible to average or to determine the median or mode, and to add a number of times the standard deviation (for example 2x, 3x or 4x the standard deviation) to this value (average, median or mode). Various implementations are provided. In accordance with various embodiments, the calculating for that purpose comprises at least one step of: determining an average, determining a median, determining a mode, determining a characteristic time span that is indicative of a predetermined percentile of the plurality of time differences, or determining a maximum time difference of the plurality of time differences.

The new and non-obvious method described herein is directed to its use with passive RFID transponders. In some implementations or examples of concepts according to the invention, at least one transponder is selected from a group comprising a full-duplex (FDX) transponder suitable for exchanging data with the reader device via full-duplex data communication, and a half-duplex (HDX) transponder suitable for data communication via a half-duplex channel. In particular, only one transponder of the first transponder and the second transponder is an FDX passive RFID transponder that is configured for exchanging data with the reader device by means of full duplex data communication, and only another transponder of the first transponder and the second transponder is an HDX passive RFID transponder that is configured for exchanging data with the reader device by means of half duplex data communication. The selection of these transponders provides flexibility in implementing the livestock management system, enabling both energy efficiency and extended communication options, depending on the specific requirements of the application. Furthermore, old and new types of tags or transponders often consist of different technologies, HDX versus FDX and/or passive RFID versus active RFID. The method can be applied to all these different (and other) combinations. Furthermore, passive RFID tags may also be either FDX or HDX.

In some embodiments, the plurality of transponders comprises both at least one full-duplex passive RFID transponder and at least one half-duplex passive RFID transponder. The step of receiving the plurality of identification data comprises transmitting, by the reader device, an interrogation signal, which has a certain signal duration. During this signal duration, a first transmission signal is received, while after the end of the interrogation signal a second transmission signal is received. Determining whether both identification data have been received within a predetermined time span comprises correcting the receipt time of the second transmission signal by subtracting the signal duration of the interrogation signal. This approach improves accuracy in associating identification data with a specific animal, even in the case of almost simultaneous receipt of signals within one time cycle.

In certain implementations, the reader device transmits the interrogation signal periodically in multiple time cycles. During the first time cycle, a first transmission signal is received, while a second transmission signal is received in a second time cycle that follows a whole number of *n* time cycles later, with *n* greater than or equal to zero (*n*≥0). The step of correcting the time of receipt of the second transmission signal comprises subtracting a time duration of at least *n* time cycles. This mechanism ensures correct coupling of signals to an animal when they are transmitted in different time cycles but nevertheless clearly belong together. For example, a time span may be set within which signals are still counted as belonging together.

In some embodiments, the method comprises receiving a first and a second transmission signal, followed by determining the signal strength of at least one of these signals. When the signal strength of one of the signals is below a predetermined threshold value, that signal is rejected. This approach increases the reliability of the data processing by ensuring that only signals of sufficient strength are accepted, thereby preventing interference and erroneous associations.

In certain implementations, the reader device is equipped with one receiving antenna, via which the plurality of identification data is received. In alternative embodiments, the reader device comprises both a first and a second receiving antenna, wherein the identification data are received via at least one of these antennas. These configurations improve the flexibility and reliability of the system by taking into account different environmental conditions and technical requirements, such as better coverage and less sensitivity to signal obstruction.

In accordance with a second aspect thereof, the invention provides a device for use in a livestock management system, for carrying out a method according to the first aspect, as described above in various embodiments, implementations and examples. Such a device for example comprises a reader device for receiving a plurality of identification data, the plurality of identification data comprising at least first identification data and second identification data; and a time determination unit for determining a time of receipt of individual identification data of the plurality of identification data. The device further comprises, or is operatively connected with, a controller for processing the plurality of identification data and a data storage. Therein, the first identification data are already associated with animal identification data of the animal, and the first identification data and the animal identification data are stored in association with each other in the data storage. The controller is configured for determining whether the first and the second identification data have both been received within a predetermined time span. The controller is further also configured for associating the second transponder with the animal, wherein the second identification data are associated with the animal identification data only when it has been determined during the determining that the first and the second identification data have both been received within the predetermined time span.

In accordance with a third aspect thereof, the invention provides a livestock management system comprising a device according to the second aspect above, or the livestock management system is otherwise configured for carrying out a method according to the first aspect.

In accordance with a fourth aspect thereof, the invention provides a computer-implemented method for use in a livestock management system, for associating a second transponder with an animal, which animal is provided with a first transponder configured for transmitting first identification data and a second transponder configured for transmitting second identification data, wherein, in a data storage operatively connected with the livestock management system, the first identification data are stored in association with animal identification data of the animal, comprising the steps of: receiving, with a reader device of the livestock management system, a plurality of identification data, the plurality of identification data comprising the first identification data and the second identification data; determining, with a controller of the livestock management system, whether the first and the second identification data have both been received within a predetermined time span; and associating, depending on the step of determining, the second transponder with the animal, wherein the second identification data are associated with the animal identification data only when it has been determined during the step of determining that the first and the second identification data have both been received within the predetermined time span.

In a similar manner as described, it is also possible, independently of registering a second tag in a livestock management system and also in no way related thereto, to associate two transponders belonging together with each other. This is then done in the same manner as described above in accordance with the concept described herein or in accordance with one of the embodiments thereof, but without it being necessary that one of the two transponders or tags is known in a livestock management system and without the second transponder or tag being stored therein in association with animal identification data. Each of the embodiments is *mutatis mutandis* likewise applicable to this method.

### Brief description of the drawings

The invention will be discussed below on the basis of specific embodiments thereof not intended to be limiting, with reference to the accompanying figures, in which:
Figure 1 schematically shows an example of a livestock management system in an embodiment according to the third aspect;
Figure 2 shows an example of an implementation of the described method according to the first aspect;
Figure 3 shows, by way of example, a possible course of intensities of transmission signals of transponders physically connected to the same animal;
Figure 4 shows a further example of an implementation of the described method according to the first aspect;
Figure 5 schematically shows a method carried out in accordance with an example according to the first aspect.
Figure 6 shows an embodiment of the invention, in which a reader device is formed by a single reader with one antenna;
Figure 7 shows an embodiment of the invention, in which a reader device is formed by a single reader with two antennas;
Figure 8 shows a transmission schedule according to an embodiment of the invention, in which FDX and HDX signals are received in response to an interrogation signal;
Figure 9A shows a transmission schedule according to an embodiment of the invention, in which FDX and HDX signals are received in response to different interrogation signals;
Figure 9B shows a transmission schedule according to an embodiment of the invention, in which two FDX signals are received in response to an interrogation signal.

### Detailed description

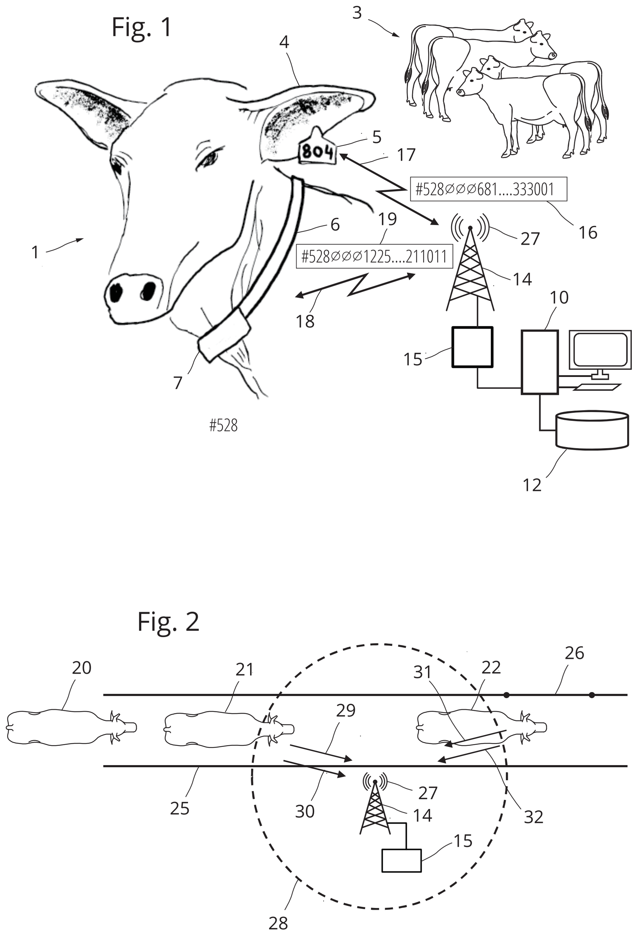

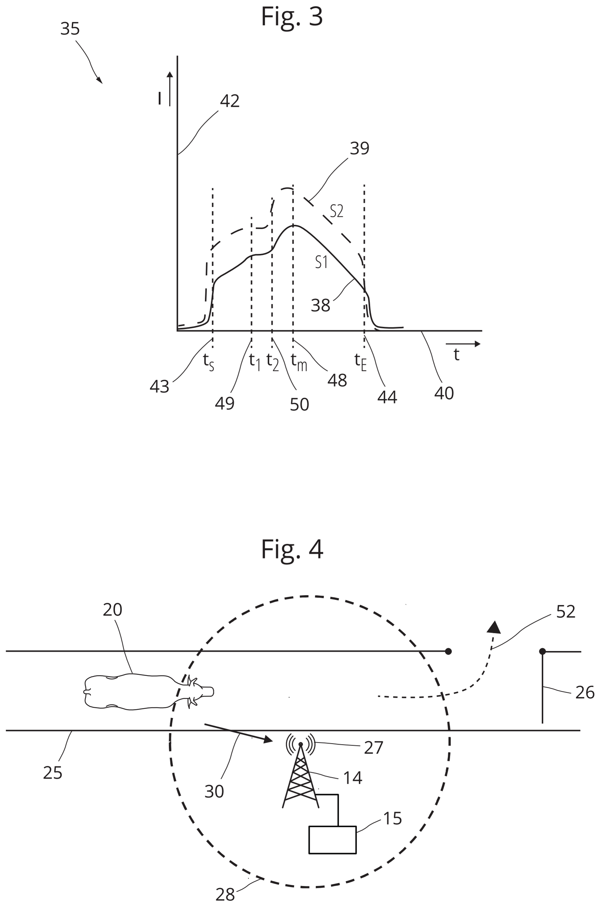

Figure 1 schematically shows a cow 1. The cow 1 forms part of a herd 3, and is provided with an ear tag 5 that is physically connected to the ear 4. The ear tag 5 comprises a transponder provided with passive radio frequency identification (RFID) technology. With the passive RFID transponder 5, identification data 16 can be transmitted to a livestock management system 10 by bringing the transponder 5 into an interrogation field 28 (see for example Figures 2 and 4). The interrogation field 28 is generated by an interrogation signal transmitted by the reader device 15 via antenna 14, which is received by a resonant circuit in the transponder 5, which uses the energy from the received signal to transmit a modulated transmission signal 17. The transmission signal 17 is modulated in order to transmit data therewith, including first identification data 16 that uniquely belong to the transponder 5. The interrogation field 28 is generated, for example, by transmitting the interrogation signal via antenna 14 of reader device 15. The reader device 15 may be a single reader, or may form part of a plurality of readers with fixed antennas belonging to the livestock management system 10. Reader devices 15 with fixed antennas 14 are otherwise optional, and an interrogation field 28 can also be generated in another manner. Thus, for example, it is also possible to generate interrogation field 28 by means of a specifically equipped mobile or portable scanner or reader (not shown) which can likewise serve as reader device 15 and is also provided with an antenna. This can be operatively connected in a suitable manner, for example wirelessly or wired, to a data communication network, such as a wide area network (WAN). Via such a data communication network, data can be transmitted from the reader device 15 to the livestock management system 10, as schematically shown with connection 13 (which may be a (partly) wired or (partly) wireless connection). In this manner, the reader can generate an interrogation field 28 and receive transmission signals 17 and 18 with identification data 16 and 19.

The cow 1 is furthermore provided with a collar 6 which is likewise provided with a transponder 7 comprising RFID technology for exchanging transmission signals 18 via antenna 14 of reader device 15 with livestock management system 10. The transponder 5 is already registered in the livestock management system 10, and the identification data 16 transmitted via transmission signal 17 are stored in data storage 12 of the system 10. The identification data 16 of transponder 5 are thereby linked or associated with animal identification data that uniquely belong to cow 1. Thus, for example, it is possible that the ear tag number '804' stated on the ear tag 5 is associated in the database 12 with the identification data 16 of transponder 5. Instead of the local farm identification data '804' with which the animal 1 in the herd 3 is identified by the livestock farmer, additionally or alternatively an association may also have been made with a unique digital animal identification number with which cow 1 is registered, for example, in a national database. Other associations are of course also possible, also with other types of information.

The transponder 7 is not yet registered, and therefore the identification data 19 transmitted by transponder 7 via transmission signal 18 are not stored in the database 12. The database 12 also does not contain an association of these data with the animal identification of cow 1. In the example, transponder 7 is not yet known in the system 10. Alternatively, it is also possible that the identification data 16 are known in livestock management system 10, but the association with animal identification data is not yet. Yet another possibility is that the collar 6 with transponder 7 is reused and was previously associated with another cow, and that this association must now be corrected for cow 1 to which the collar tag 7 is currently connected. This latter special example deviates from the general examples described here, and will be discussed later.

Figure 2 shows a possible implementation of a method that meets the wording of the claims. The method can of course be carried out or implemented in a different manner than is shown in this figure. In Figure 2, a passageway 25 can be seen through which animals 20, 21 and 22 from the herd 3 are guided. In the vicinity of the passageway 25 is antenna 14 of reader device 15 of livestock management system 10. With the antenna 14, an interrogation field 28 is generated by transmitting an electromagnetic carrier wave with a suitable carrier frequency; for RFID this may for example be a frequency in the range of 100 to 135 kilohertz (kHz) for a low-frequency field or 13.56 megahertz (MHz) for a high-frequency field. This is otherwise not limited to this frequency range, and can also be applied with other frequencies. Examples thereof are passive UHF RFID tags in the frequency range of 860 MHz to 960 MHz, but more examples are conceivable. For the present example, we use the above-mentioned frequencies here. The range of the field, or in other words, the distance over which the field is still sufficiently strong to transfer sufficient energy to a transponder 5 or 7 for effecting a return signal 17 or 18, is determined by the amplitude of the magnetic field strength and thus the amplitude of the carrier wave. In Figure 2, the interrogation field 28 is schematically shown with a boundary (dotted line). The person skilled in the art understands that the carrier wave is simply present outside that boundary and decreases in strength with the distance to the antenna, so that the field is also present outside it. Outside the boundary, however, it is not sufficiently strong to transfer sufficient energy to obtain a return signal 17 or 18 from a transponder 5 or 7, so that this field outside the boundary has no functional meaning within the context of the concept described here. By increasing the intensity of the carrier wave, the field 28 becomes larger and the boundary in Figure 2 shifts.

In Figure 2, cow 21 enters the interrogation field 28. Cow 21 is at the moment when the ear tag with transponder 5 and the collar with transponder 7 come within the interrogation field 28. At that moment, the transponders 5 and 7 receive sufficient energy from the interrogation field 28 to send back transmission signals 29 and 30 in response thereto. Transmission signals 29 and 30 are received by antenna 14 of reader device 15 and comprise, respectively, the identification data 16 of transponder 5 and the identification data 19 of transponder 7. Cow 21 itself does not notice anything of the interrogation field 28 and will therefore continue its way through passageway 25. As long as cow 21 is within the field 28, the transponders 5 and 7 continue to receive the carrier wave of the interrogation field 28 so that the transponders 5 and 7 continue to transmit the transmission signals 29 and 30. Cow 22 has just arrived at the point where it leaves the interrogation field 28. Transmission signals 31 and 32 originating from the transponders of cow 22 mark the last transmission signals received by antenna 14 from the transponders of cow 22.

According to an example implementation that falls under the wording of the appended claims, the livestock management system 10 checks within what time difference each pair of signals to be formed from the transmission signals 29, 30, 31 and 32 has been received. In the situation of Figure 2, signals 29 and 30 are received for the first time when cow 21 enters the interrogation field 28. The signals 29 and 30 will be received for the first time by antenna 14 approximately simultaneously. When the time difference is determined between signals 29 and 30, it will therefore be expected to be reasonably small. Because both signals 29 and 30 have been received for the first time almost simultaneously, and thus the time difference is smaller than, for example, a selectable threshold value (which threshold value defines the predetermined time span with which the time differences are compared), it can be assumed that transponders 5 and 7 carried by cow 21 also both belong to this one cow 21.

The livestock management system 10, for example, further checks whether one of the identification data 16 and 19 is stored in data storage 12, and, if so, whether an association with animal identification data is also stored in the data storage. Livestock management system 10 can for example determine that identification data 16 of transponder 5 are present in data storage 12 and that the animal identification number with which cow 21 is registered in a national database is stored in data storage 12 in association with identification data 16. Furthermore, livestock management system 10 can determine that the identification data 19 are not yet stored in data storage 12, or alternatively, that the identification data 19 are stored in data storage 12 but without association with an animal identification number. However, if it is determined that the identification data 19 are stored in data storage 12 including association with the animal identification number belonging to cow 21, then the system 10 does nothing. In that case, cow 21 is already known in the system, and both transponders 5 and 7 are also already correctly registered. If, however, it is determined that the identification data 19 are not yet stored in data storage 12, or alternatively, that the identification data 19 are stored in data storage 12 but without association with an animal identification number, then the livestock management system 10 will respond by associating identification data 19 with the same animal identification number with which identification data 16 in data storage 12 are also associated. Transponder 7 is thereby automatically correctly registered.

An alternative outcome is also that the identification data 19 have indeed been stored in data storage 12 including an association with an animal identification number, but that the animal identification number does not correspond to the animal identification number that is associated with identification data 16. In that case, the system 10 knows that one of the two registrations has not been registered correctly. The system can then respond by opening separation gate 26, as will be explained in the following with reference to Figure 4. Additionally, it is also possible that the system performs additional checks in order to determine or verify with greater certainty that the two signals 29 and 30 do in fact originate from transponders that belong to cow 21. This is further explained on the basis of the example shown in Figure 3.

Figure 3 shows an intensity profile 35 of two received transmission signals S₁ (reference numeral 38) and S₂ (reference numeral 39). The horizontal axis 40 represents time *t*, and the vertical axis 42 represents the intensity of the transmission signal as received by the reader device 15. The time *tₛ* 43 marks the moment that a cow 1, with its head and transponders 5 and 7, enters the interrogation field 28. Both signals S₁ and S₂ are received almost simultaneously; however, S₂ is of greater intensity than S₁. Various reasons may underlie this, for example because the ear tag 5 of cow 1 is located behind the head relative to the antenna 14 of reader device 15, as a result of which it receives less energy and S₁ is received more weakly because the signal is further attenuated by the head. Another reason may be that the electrical circuit of transponder 5 has for example suffered wear and experiences a higher internal resistance. Little can therefore be inferred from the intensity of signals S₁ and S₂ per se. The time course, however, does provide possibilities for a good comparison. The strength of signals S₁ and S₂ is namely also dependent on the distance from transponders 5 and 7 to the antenna 14. Because the cow (for example cow 21) walks through the field 28, this distance changes for both transponders 5 and 7 to approximately the same extent. The time course of signals S₁ 38 and S₂ 39 is therefore clearly comparable. Thus, it can be seen that cow 21 briefly stopped between times *t₁* and *t₂*, and subsequently made a short sprint to close to antenna 14. The position in the passageway 25 that lies closest to antenna 14 was reached by cow 21 at time *tₘ*. Thereafter, the cow 21 continued walking at approximately constant speed and left the field at time *tE.*

For both signals *S₁* and *S₂*, the same time course of the intensity over time is visible, and the times *tₛ*, *tₘ*, *t_{E}*, *t₁* and *t₂* are visible in the profile. In order to be able to determine even more reliably whether received transmission signals belong to the same animal, it is therefore also possible to look at the intensity course of the transmission signals and at times that mark certain events therein. Each of these moments is, independently of the other parameters, indicative for indicating an association with the animal 21. Although the time difference between two received signals can readily be applied to assess this, this can also be done on the basis of one of the other parameters mentioned above. For example, determining times *tₛ* and *t_{E}* for each of the signals indicates whether both transponders have or have not entered the interrogation field 28 simultaneously and have again left it, and is thereby indicative for indicating whether the two transponders are or are not connected to the same animal. Each of the times *tₛ* and *t_{E}* individually is already indicative in that respect, and in combination even more so. Passing the antenna 14 at time *tₘ* is also such an event. Furthermore, briefly stopping at times *t₁* and *t₂* and then accelerating is characteristic of the behavior that this one cow 21 exhibited at that moment. The entire intensity profile, irrespective of these specific times, is therefore also indicative for indicating whether the two transponders are or are not connected to the same animal.

Although Figure 3 is focused on the intensity profile, the example can be extended to other transmission characteristics, in particular insofar as they have a clear distance dependence. This also applies, for example, to the course of the time-of-flight of the RFID signal if this can be determined. Furthermore, the course of the angle-of-arrival can also be used for this purpose.

Figure 4 further shows an example of the passage of cow 20 through the interrogation field 28 in the passageway. Upon entering the interrogation field 28, cow 20 transmits only one transmission signal 30. This may have various causes, including a defect of one of the transponders 5 or 7 or the absence of one of the transponders 5 or 7. The system 10 can respond by opening separation gate 26, so that cow 20 can be separated 52 and the operation and presence of the transponders 5 and 7 on cow 20 can be further investigated manually. Additionally, it is possible to investigate whether the received signal 30 contains identification data registered in the system. It can thereby be determined which of the transponders 5 or 7 is present.

Independently of the example above, it may also occur (not shown) that two signals 29 and 30 are indeed received (as in Figure 2), but that neither of the two signals comprises identification data that are recognized in livestock management system 10. In that case, neither of the transponders 5 and 7 is registered, and the cow 20 is provided with entirely new transponders that still have to be entered into the system 10. Separating is then again indicated.

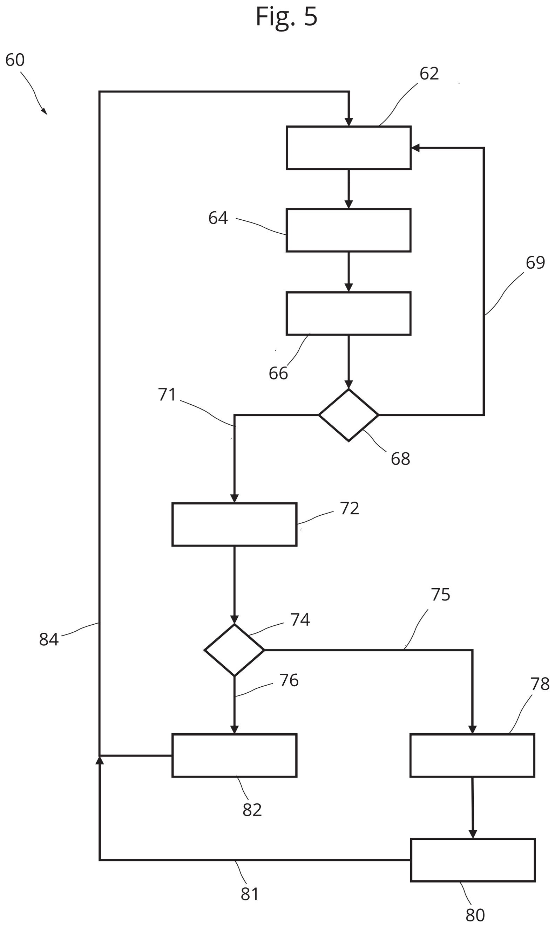

Figure 5 schematically shows an implementation of an example method that falls under the wording of the claims. This method starts with, in step 62, receiving identification data, for example identification data 16 or 19, with reader device 15 of the livestock management system 10 by means of a transmission signal 17 or 18. The time of receipt is determined in step 64 and in step 66 it is determined whether the identification data, of which it is at that moment not yet known whether these originate from transponder 5 or 7, are or are not registered in livestock management system 10 and occur in the data storage 12. When this is the case, it is determined in step 66 that identification data 16 of transponder 5 have been received. When this is not the case, it is determined in step 66 that identification data 19 of transponder 7 have been received. In step 68, the system 10 determines whether an additional transmission signal has already been received with further-different-identification data. If this is not the case, the method continues in step 62.

When it has been determined in step 68 that an additional transmission signal has indeed been received with identification data, then, from the preceding steps 64 and 66, the time of receipt is also known, and it is also known to which transponder 5 or 7 these belong. Step 68 checks whether two different identification data 16 and 19 have been received, thus belonging to two different transponders 5 and 7. In step 72 it is subsequently determined how large the time difference is that lies between the times of receipt, as determined in step 64 for both signals 17 and 18. Step 74 subsequently checks whether this time difference is greater or smaller than a predetermined time span, for example by means of a reference value. If the time difference is greater than the predetermined time span, then livestock management system 10 determines in step 82 that the two signals probably belong to different animals. The method then continues in step 62. If, however, the time difference is smaller than the predetermined time span, then the system assumes that both identification data 16 and 19 originate from transponders 5 and 7 that are worn by the same animal 1. In that case, an optional further check may still take place in step 78. A further check may for example be a check whether previously received signals confirm the assumption or not. A further check may also include that the received transmission signals 17 and 18, the time course (as in Figure 3) or specific times are examined, for increasing reliability. An assumption can in step 78, on the basis of checks, still be rejected (not shown). In step 80, an association between identification data 19 and the animal identification data belonging to identification data 16 is stored in the data storage 12. Both identification data 16 and 19 are thereby associated with the animal identification data of the same animal 1. Via route 81, the method continues in step 62.

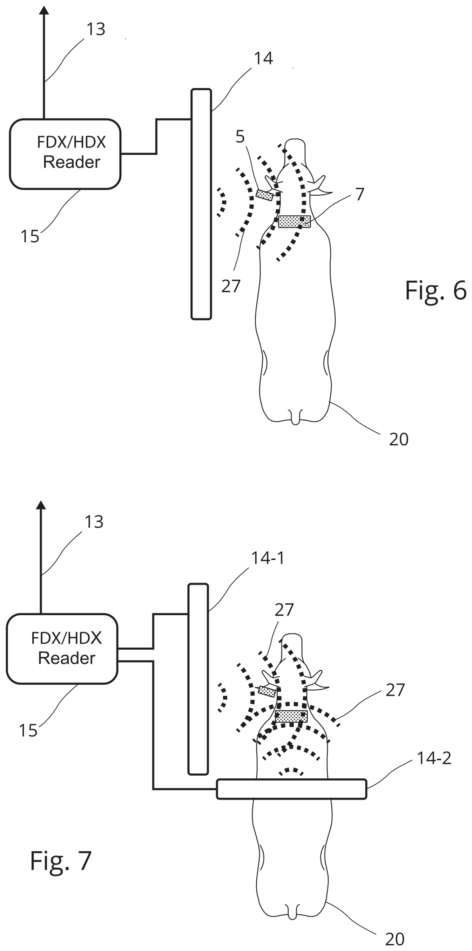

Figures 6 through 9 show different embodiments in which a reader device 15 receives transmission signals via one or more antennas 14, from passive RFID tags. Figure 6 shows a first embodiment in which a reader device 15 has an antenna 14. With the antenna 14, an interrogation signal 27 is transmitted that can be received by the ear tag 5 and by the neck tag 7. The time of receipt of the transmission signals 17 and 18 (not shown) as well as the identification data included therein, is transmitted via connection 13 to the livestock management system 10. The livestock management system 10 can determine, from the time difference between the receipt of the transmission signals 17 and 18, whether both tags 5 and 7 belong to the same cow 20.

Figure 7 shows another embodiment, in which a reader device 15 has two antennas 14-1 and 14-2. Both antennas 14-1 and 14-2 can transmit the same interrogation signal 27, but this is not essential and can also be implemented differently. The two antennas 14-1 and 14-2 may for example consist of a plate antenna and a walk-through antenna, and are located in each other's vicinity so as to form, by transmitting interrogation signal 27, the interrogation field 28 (see Figures 2 and 4). The transmission signals 17 and 18 that are received from the tags 5 and 7 can be received via one or both antennas 14-1 and 14-2. It may also occur that a signal 18 from the neck tag 7 is received via walk-through antenna 14-2 and that transmission signal 17 from the ear tag 5 is received via plate antenna 14-1. The reader device 15 registers not only a time of receipt or receipt duration of each of the signals 17 and 18, but also the received identification data 16 and 19 of both tags. When the receipt times and/or times at which receipt is stopped (for example when the signal strength drops below a predetermined threshold value) correspond, these can, as described above, be coupled to the same animal 20.

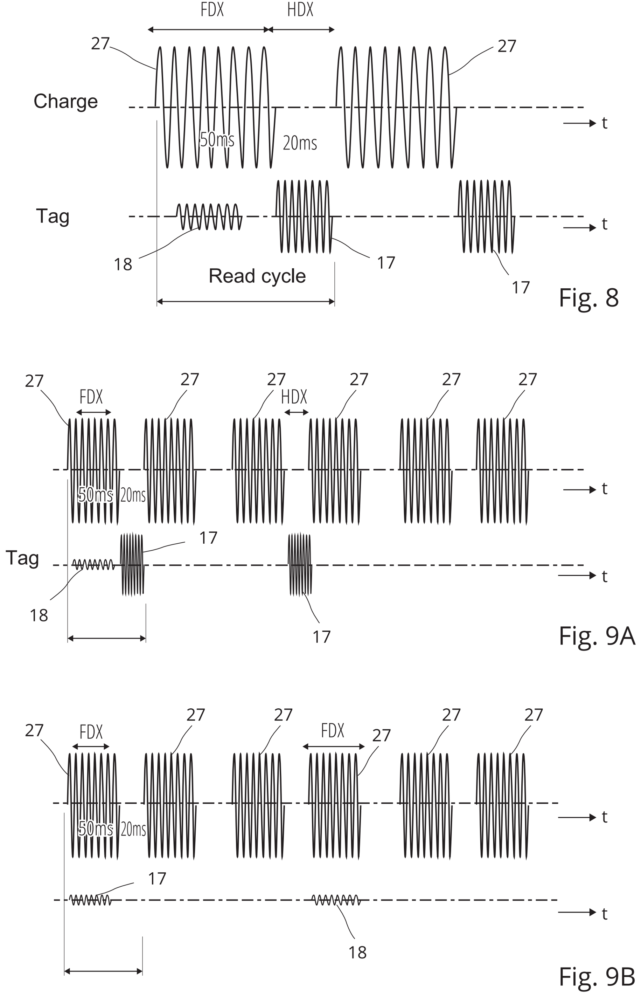

Figures 8, 9A and 9B show different possibilities of receiving transmission signals 17 and 18, belonging to the same animal 20. In Figure 8, the transmission signals 17 and 18 are received at different times, because the transmission signals 17 have been transmitted by a tag of the half duplex (HDX) type. A half duplex type tag can communicate in two directions over the same channel, but not simultaneously. An HDX type tag, for example ear tag 5, therefore transmits the transmission signal 17 only after the end of receipt of the interrogation signal 27. The energy from the interrogation signal 27 is then for example temporarily stored in a capacitor, and when transmitting the transmission signal 17 this energy is released again. Transmission signal 18 in Figure 8 is transmitted by a full duplex tag, for example neck tag 7. In a full duplex type tag, the interrogation signal 27 is, upon receipt, directly modulated with the identification data 19 and transmitted as transmission signal 18. The energy is not stored therein, but used directly. The signal 18 is therefore transmitted within a time cycle of, in the given example, 70 milliseconds (70 ms) earlier than HDX signal 17 (40 to 50 ms time difference), while this time difference is here not indicative for signals from different animals. The reader device 15 or the livestock management system 10 can optionally correct for this time difference, when it is known that a mix of HDX and FDX type tags 5 and 7 is used. In the example, ear tag 5 is designated as a half duplex tag, and neck tag 7 as a full duplex tag. The skilled person will understand that this has been chosen arbitrarily for the example: the tags may be of the same type or, conversely, may differ the other way around. With tags of the same type, it may be that the signals 17 and 18 are received simultaneously or almost simultaneously. Furthermore, the duration of the interrogation signal 27, here 50 ms with a listening time for the HDX signal of 20 ms (total 70 ms), can also be chosen differently. For example, an interrogation signal 27 may last 60 ms with a listening time for the HDX signal of 40 ms (total 100 ms); or an interrogation signal 27 may last 35 ms with a listening time for the HDX signal of 15 ms (total 50 ms). This is a design choice.

In Figures 9A and 9B another embodiment is shown, in which the transmission signals 17 and 18 are received in two different time cycles. In Figure 9A an HDX-type transmission signal 17 is received twice in response to different interrogation signals 27. It is also possible that only the last of these two is received, such that the FDX signal 18 is received in the first time cycle after a first interrogation signal 27 and the HDX signal 17 is received in the third time cycle after a preceding third interrogation signal 27. This time difference can optionally be corrected for, for example by subtracting the duration of two time cycles from the reception moment of the second signal 17. In addition, as also in Figure 8, an additional correction can be made by subtracting the time duration of the interrogation signal 27 (here 50 ms). The livestock management system 10 can be set to nevertheless accept transmission signals 17 and 18 that are received within a time span of a predetermined number of time cycles as belonging to the same animal 20.

In Figure 9B both transmission signals 17 and 18 are both full duplex (FDX) signals, but they are not both received within the same time cycle. For example, in the embodiment of Figure 7 this could be the case if the FDX signals 17 and 18 are received by either antenna 14-1 or 14-2.

The specific embodiments of the invention described above are intended to illustrate the inventive principle. It is assumed that the implementation and the operation of the invention will be apparent from the foregoing description and the accompanying illustrations. The invention is not limited to any embodiment described or shown herein. For the sake of clarity and conciseness of the description, features are described herein as part of the same or of separate embodiments; it will be clear to the person skilled in the art that embodiments within the scope of protection of the invention also include embodiments comprising combinations of all or some of the described features. Within the ability of the person skilled in the art, changes are possible which are deemed to lie within the scope of protection. Likewise, all kinematic inversions are included within the scope of protection of the present invention. Expressions such as "consisting of", when used in this description or the accompanying claims, should not be construed as an exhaustive enumeration, but rather in an inclusive meaning of "consisting at least of". Designations such as "a" or "one" should not be construed as a limitation to only a single instance, but have the meaning of "at least one instance" and do not exclude a plurality. Expressions such as: "means for..." must be read as: "component configured for..." or "element constructed to..." and are to be understood to include all equivalents for the described constructions. The use of expressions such as: "critical", "advantageous", "preferably", "desirable" etc., is not intended to limit the invention. Moreover, properties that are not specifically or expressly described or required in the construction according to the invention, but that do lie within the reach of the person skilled in the art, may also be included without departing from the scope of protection, as determined by the following claims.

## Claims

1. Method for use of a livestock management system, for associating a second transponder with an animal, wherein the animal is provided with a plurality of transponders comprising a first transponder and the second transponder, wherein the first transponder and the second transponder are respectively configured for transmitting first identification data and second identification data, wherein the first identification data are already associated with animal identification data of the animal, and wherein the first identification data and the animal identification data are stored in association with each other in a data storage of the livestock management system, the method comprising the steps of:
receiving, with a reader device of the livestock management system, a plurality of identification data, the plurality of identification data comprising the first identification data and the second identification data;
determining, with a controller of the livestock management system, whether the first and the second identification data have both been received within a predetermined time span; and
associating, depending on the step of determining, the second transponder with the animal, wherein the second identification data are associated with the animal identification data only when it has been determined during the step of determining that the first and the second identification data have both been received within the predetermined time span,
wherein only one transponder of the first transponder and the second transponder is a full duplex - FDX - passive radio frequency identification - RFID - transponder that is configured for exchanging data with the reader device by means of full duplex data communication,
and wherein only another transponder of the first transponder and the second transponder is a half duplex - HDX - passive radio frequency identification - RFID - transponder that is configured for exchanging data with the reader device by means of half duplex data communication.

2. Method according to claim 1, wherein the step of determining whether the first and the second identification data have been received within the predetermined time span comprises one or more of the following sub-steps:
determining a time difference between receipt of the first identification data and receipt of the second identification data, and comparing the time difference with the predetermined time span;
determining a first time duration within which transmission signals comprising the first identification data are received and a second time duration within which transmission signals comprising the second identification data are received, and comparing the first time duration with the second time duration;
determining a first start time of a time duration within which transmission signals comprising the first identification data are received and a second start time of a time duration within which transmission signals comprising the second identification data are received, and comparing the first start time with the second start time;
determining a first end time of a time duration within which transmission signals comprising the first identification data are received and a second end time of a time duration within which transmission signals comprising the second identification data are received, and comparing the first end time with the second end time.

3. Method according to claim 1 or 2, wherein the first transponder and the second transponder, for transmitting the first and the second identification data, respectively are configured for transmitting a first transmission signal comprising the first identification data and a second transmission signal comprising the second identification data,
the method further comprising, prior to the step of associating, analyzing, with the controller, one or more signal characteristics of both the first transmission signal and the second transmission signal, wherein the step of associating is further performed depending on the step of analyzing.

4. Method according to claim 3, wherein the step of analyzing the one or more signal characteristics comprises at least one of the following steps:
determining and comparing a signal intensity of the first transmission signal with a signal intensity of the second transmission signal;
determining a first time course of a signal intensity of the first transmission signal and determining a second time course of a signal intensity of the second transmission signal, and comparing the first time course with the second time course.

5. Method according to one of the preceding claims, wherein, when it has been determined during the step of determining that the first and the second identification data have not both been received within the predetermined time span, the method comprises a further step selected from a group comprising:
determining that the first identification data have not been received, and depending thereon detecting a defect, malfunction or absence of the first transponder;
determining that the second identification data have not been received, and depending thereon designating that the animal that is associated with the first identification data is not provided with the second transponder.

6. Method according to claim 5, further comprising a step of operating a separation gate, for separating the animal.

7. Method according to one of the preceding claims, further comprising, when the second identification data are associated with the animal identification data, storing the second identification data and the animal identification data in the data storage of the livestock management system.

8. Method according to one of the preceding claims, wherein the step of receiving the plurality of identification data comprises the sub-steps of:
determining, with a processor of the livestock management system, whether at least one identification data of the plurality of identification data comprises a country code; and
designating, when the at least one identification data comprises a country code, the at least one identification data as the first identification data.

9. Method according to claim 8, wherein the step of receiving the plurality of identification data further comprises the sub-steps of:
designating, when the at least one identification data does not comprise a country code, the at least one identification data as the second identification data.

10. Method according to one of the preceding claims, wherein the time span is statistically determined or corrected, wherein, for the at least one of determining or correcting the time span, the method comprises the steps of:
obtaining, by the controller, for a plurality of animals, transmission data, wherein the transmission data for each animal comprise at least: a first receipt time of a first receipt of the first identification data and a second receipt time of a first receipt of the second identification data;
for each animal, based on the transmission data, determining a time difference between the first receipt time and the second receipt time, for obtaining a plurality of time differences; and
calculating, based on the plurality of time differences, the time span.

11. Method according to claim 10, wherein the calculating comprises at least one step of: determining an average, determining a median, determining a mode, determining a characteristic time span that is indicative of a predetermined percentile of the plurality of time differences, or determining a maximum time difference of the plurality of time differences.

12. Method according to one of the preceding claims, wherein the step of receiving the plurality of identification data comprises:
transmitting, with the reader device, an interrogation signal, wherein the interrogation signal has, in time, a signal duration;
receiving, during the transmitting of the interrogation signal, at least a first transmission signal; and
receiving, following an end of the interrogation signal, at least a second transmission signal;
wherein the step of determining whether the first and the second identification data have both been received within a predetermined time span comprises a step of:
correcting a moment of reception of the second transmission signal by subtracting the signal duration of the interrogation signal.

13. Method according to any of the preceding claims, wherein the step of receiving the plurality of identification data comprises:
transmitting, with the reader device, an interrogation signal, wherein the interrogation signal is transmitted periodically in a plurality of time cycles;
receiving, during the transmitting of the interrogation signal in a first time cycle, at least one first transmission signal; and
receiving, following an end of the interrogation signal during a second time cycle, at least one second transmission signal, wherein the second time cycle follows the first time cycle a whole number n time cycles later, wherein n is greater than or equal to zero;
wherein the step of determining whether the first and the second identification data have both been received within a predetermined time span comprises a step of:
correcting a time of receipt of the second transmission signal by subtracting a time duration of at least n time cycles

14. Method according to one of the preceding claims, wherein the step of receiving the plurality of identification data comprises:
receiving a first and a second transmission signal;
determining a signal strength of at least one of the first and the second transmission signal; and
rejecting the at least one of the first and the second transmission signal when the signal strength is below a predetermined threshold value.

15. Method according to one of the preceding claims, wherein one of:
the reader device is provided with one reader which is connected to one first receiving antenna, wherein the plurality of identification data are received via the first receiving antenna;
the reader device is provided with one reader which is connected to a first and a second receiving antenna, wherein the plurality of identification data are received via at least one of the first receiving antenna and the second receiving antenna, and wherein the receiving antennas are mutually positioned such that an interrogation field that is formed by transmitting an interrogation signal via the first receiving antenna substantially coincides with an interrogation field that is formed by transmitting an interrogation signal via the second receiving antenna; or the reader device is provided with a plurality of readers which are connected to a plurality of receiving antennas, wherein the plurality of identification data are received via at least one receiving antenna of the plurality of receiving antennas, and wherein the receiving antennas are mutually positioned such that, for each receiving antenna, an interrogation field that is formed by transmitting an interrogation signal via the respective receiving antenna substantially coincides with interrogation fields that are formed by transmitting an interrogation signal via each of the other receiving antennas.

16. Device for use in a livestock management system, for carrying out a method according to one of the preceding claims, the device comprising:
a reader device for receiving a plurality of identification data, the plurality of identification data comprising at least first identification data and second identification data;
a time determination unit for determining a time of receipt of individual identification data of the plurality of identification data;
further comprising or operatively connected with:
a controller for processing the plurality of identification data; and
a data storage, wherein the first identification data are already associated with animal identification data of the animal, and wherein the first identification data and the animal identification data are stored in association with each other in the data storage;
wherein the controller is configured for:
determining whether the first and the second identification data have both been received within a predetermined time span;
associating the second transponder with the animal, wherein the second identification data are associated with the animal identification data only when it has been determined during the determining that the first and the second identification data have both been received within the predetermined time span.

17. Device according to claim 16, wherein, for determining whether the first and the second identification data have been received within the predetermined time span, the controller is further configured for performing one or more of the sub-steps of:
determining, with the controller, a time difference between receipt of the first identification data and receipt of the second identification data, and comparing the time difference with the predetermined time span;
determining, with the controller, a first time duration within which transmission signals comprising the first identification data are received and a second time duration within which transmission signals comprising the second identification data are received, and comparing the first time duration with the second time duration;
determining, with the controller, a first start time of a time duration within which transmission signals comprising the first identification data are received and a second start time of a time duration within which transmission signals comprising the second identification data are received, and comparing the first start time with the second start time;
determining, with the controller, a first end time of a time duration within which transmission signals comprising the first identification data are received and a second end time of a time duration within which transmission signals comprising the second identification data are received, and comparing the first end time with the second end time.

18. Device according to claim 16 or 17, wherein the reader device is configured for receiving a first transmission signal comprising the first identification data and a second transmission signal comprising the second identification data, wherein the controller is configured for, prior to the step of associating, analyzing one or more signal characteristics of both the first transmission signal and the second transmission signal, and for performing the step of associating depending on the analyzing.

19. Device according to claim 18, wherein, for analyzing the one or more signal characteristics, the controller is configured for at least one of:
determining and comparing a signal intensity of the first transmission signal with a signal intensity of the second transmission signal;
determining a first time course of a signal intensity of the first transmission signal and determining a second time course of a signal intensity of the second transmission signal, and comparing the first time course with the second time course.

20. Device according to one or more of claims 16-19, wherein the controller is configured for performing a further step when it has been determined during the step of determining that the first and the second identification data have not both been received within the predetermined time span, wherein, for performing the further step, the controller is configured for at least one of:
determining that the first identification data have not been received, and depending thereon detecting a defect, malfunction or absence of the first transponder;
determining that the second identification data have not been received, and depending thereon designating that the animal that is associated with the first identification data is not provided with the second transponder;
operating a separation gate, for separating the animal, wherein the controller is operatively connected with the separation gate for operating thereof.

21. Device according to at least one of claims 16-20, wherein the controller is further configured for storing the second identification data and the animal identification data in the data storage, when the second identification data are associated with the animal identification data.

22. Livestock management system comprising a device according to one of claims 16-21, or wherein the livestock management system is configured for carrying out a method according to one of claims 1-15.

23. Computer-implemented method for use in a livestock management system, for associating a second transponder with an animal, which animal is provided with a first transponder configured for transmitting first identification data and a second transponder configured for transmitting second identification data,
wherein, in a data storage operatively connected with the livestock management system, the first identification data are stored in association with animal identification data of the animal,
comprising the steps of:
receiving, with a reader device of the livestock management system, a plurality of identification data, the plurality of identification data comprising the first identification data and the second identification data;
determining, with a controller of the livestock management system, whether the first and the second identification data have both been received within a predetermined time span; and
associating, depending on the step of determining, the second transponder with the animal, wherein the second identification data are associated with the animal identification data only when it has been determined during the step of determining that the first and the second identification data have both been received within the predetermined time span,
wherein only one transponder of the first transponder and the second transponder is a full duplex - FDX - passive radio frequency identification - RFID - transponder that is configured for exchanging data with the reader device by means of full duplex data communication,
and wherein only another transponder of the first transponder and the second transponder is a half duplex - HDX - passive radio frequency identification - RFID - transponder that is configured for exchanging data with the reader device by means of half duplex data communication.

24. Computer-implemented method according to claim 23, further configured for carrying out a method according to one of claims 2-15.
